# FASCICULE DE BREVET EUROPEEN

(11) **EP 0 831 601 B1**
(45) Date de publication et mention de la délivrance du brevet: **22.08.2001**
(21) Numéro de dépôt: 97402170.1
(22) Date de dépôt: 18.09.1997
(51) Int. Cl.: H04B 7/185, H04B 7/212, H04N 7/24

(54) **Dispositif d'émission d'informations numériques par satellite à partir de plusieurs stations au sol**
Vorrichtung zum Übertragen digitaler Informationen über Satellit von mehreren Bodenstationen
Arrangement for transmitting digital information by satellite from a plurality of ground stations

(30) Priorité: 20.09.1996 FR 9611484
(43) Date de publication de la demande: 25.03.1998
(73) Titulaire: Organisation Européenne de Télécommunications par Satellite EUTELSAT, 75015 Paris (FR); Agence Spatiale Européenne, 75015 Paris (FR)
(72) Inventeur: Pham, Huu Nghia, 78210 Saint Cyr L'Ecole (FR); Elia, Carlo, 2343 CL Oegstgeest (NL); Gouta, Maria, 00153 Roma (IT)
(74) Mandataire: Coester, Jacques Charles

(56) Documents cités:
- EP-A- 0 695 051
- US-A- 4 425 639
- US-A- 4 574 379
- SHUZO KATO: "NOVEL SATELLITE DIGITAL VIDEO TDMA SYSTEM FOR BUSINESS VIDEO COMMUNICATIONS" IEEE JOURNAL ON SELECTED AREAS IN COMMUNICATIONS, vol. 10, no. 6, 1 août 1992, pages 1054-1065, XP000296621

## Description

L'invention concerne un dispositif d'émission d'informations numériques par satellite à partir de plusieurs stations au sol, selon le préambule de la revendication 1.

La présente invention concerne ainsi les transmissions numériques par satellite à destination des récepteurs terrestres qui sont conçus pour recevoir un signal conforme à la norme ETS 300 421 (Norme de diffusion de télévision numérique par satellite dans les bandes Ku, dite DVB-S, développée par le groupe DVB, Digital Video Broadcasting).

L'invention trouve son utilité quand il faut acheminer des flux numériques de faibles débits (de l'ordre de 6 Mbit/s ou moins) à partir de plusieurs sources distantes, appartenant à des entités indépendantes, vers un point de multiplexage afin d'y constituer le multiplex final de diffusion conforme à la norme ISO/IEC 13818-1 (Partie système de la norme MPEG2 développée par le groupe MPEG, Moving Picture Expert Group), tout en évitant une architecture entraînant un point de transit terrestre et centralisé.

L'invention concerne un perfectionnement de la réalisation décrite dans la demande de brevet N° 96 11431 au nom des demandeurs.

Le perfectionnement majeur à ladite réalisation qui fait l'objet de la présente invention concerne l'introduction du mode de fonctionnement à Accès Multiple à Répartition dans le Temps, dit AMRT. Son utilité est justifiée ci-après.

Les services de télévision numérique compressés selon la norme MPEG2 nécessitent des débits de 5 Mbit/s pour une qualité vidéo dite "broadcast", soit environ 6 Mbit/s au total si l'on ajoute plusieurs voies audio haute qualité et les données auxiliaires. Il suffit d'utiliser une architecture de base décrite dans la demande de brevet citée et dans laquelle six stations émettent en continu des flux élémentaires de l'ordre de 6 Mbit/s vers un multiplexeur embarqué.

Cependant, de nombreux services multimédia en cours de développement et dits émergeants peuvent se contenter de débits beaucoup plus faibles, à savoir 3 Mbit/s pour les applications de télé-éducation, ou 2 Mbit/s pour les applications d'imageries médicales, voire quelques centaines de kilobits/s pour la visioconférence selon les normes ISO H.261 et H.264. Ces services peuvent être transmis sous la forme de flux de données librement structurées, ou encore "données privées" (Private Data, selon la terminologie de la norme ISO/IEC 13818-1) dans un multiplex MPEG2. Ces flux sont destinés à être exploités par un ordinateur et peuvent être reçus par des récepteurs de télévision numérique disposant d'une interface "data" sur laquelle on peut connecter un équipement informatique. Ces flux peuvent aussi être reçus directement dans un ordinateur individuel équipé d'une carte d'extension enfichable sur le bus d'extension de l'ordinateur.

Dans un système embarqué, selon les figures 1 et 2 de la demande de brevet citée, dans lequel chaque station émettrice se voit affecter un canal de fréquence différent et transmet en continu dans ce canal, la multiplicité des débits à offrir pour les services multimédia et le grand nombre de démodulateurs nécessaires rendent sa réalisation difficile au niveau du module embarqué, et en tout cas son exploitation peu efficace étant donné l'incertitude sur la prépondérance d'une gamme de débits donnée.

Le mode de fonctionnement AMRT, avec sa flexibilité de débit, répond efficacement et de façon appropriée aux besoins des services multimédia tout en maintenant la complexité de l'équipement embarqué à bord dans des proportions raisonnables. Dans ce mode de fonctionnement, des stations au sol, se référant à une base de temps commune, émettent sur la même fréquence, dans un ordre séquentiel et sans chevauchement dans le temps, des salves numériques à un débit plus élevé que le débit de leurs sources respectives.

Dans une transmission à travers un répéteur de satellite dit transparent, la base de temps d'un système AMRT est fournie par une ou plusieurs stations dites de référence qui émettent vers le satellite des signaux de marquage de début et de fin de trame. Les autres stations, par calcul ou par une technique d'approximations successives, déduisent leurs instants d'émission à partir des instants de réception des signaux de marquage de trame en provenance des stations de référence.

Ce principe ne peut pas s'appliquer à un système avec démodulation et multiplexage en paquets à bord d'un satellite à cause de la présence nécessaire de mémoires tampons servant à réaligner les paquets en provenance de plusieurs émetteurs. Autrement dit, l'instant d'arrivée au sol d'un paquet, sur le trajet descendant, n'est plus assez précisément représentatif de son instant d'arrivée au satellite sur le trajet montant. Un autre mécanisme permettant aux stations au sol de connaître les instants d'arrivée de leurs paquets au niveau de la réception satellite doit être défini.

Un système pouvant fonctionner en mode AMRT est connu par le brevet US No 4 425 639. Mais ce système ne résoud pas le problème qui est énoncé ci-dessus.

La présente invention porte sur la réalisation d'un système qui permet de résoudre le problème.

Pour atteindre ce but, le dispositif selon l'invention comporte les caractéristiques de la partie caractérisante de la revendication 1.
1. En effet dans ce système une ou plusieurs des liaisons sur le trajet montant 1a, 1b ...1n d'un système selon les figures 1 et 2 de la demande de brevet N° 96 11431 ci-dessus, peuvent être configurées en transmissions AMRT alors que les autres liaisons peuvent rester en mode de transmission continue (système hybride).
2. La configuration en AMRT ou en continu d'une liaison se fait sans que le fonctionnement des autres liaisons en soit affecté d'aucune manière (principe de séparation des liaisons).
3. La structure en paquets MPEG2 du signal émis par le satellite est utilisée pour la définition de la base de temps commune et des trames AMRT (système AMRT sans station de référence).
4. Des paquets spéciaux sont utilisés pour permettre aux stations au sol de faire l'acquisition et le maintien de la synchronisation avec la base de temps émise par le module embarqué selon un protocole particulier entre celles-ci et la partie de réception du module embarqué (synchronisation à l'aide d'un logiciel embarqué).
5. L'activation ou l'arrêt de la transmission d'une station AMRT se fait sans coordination avec les autres stations partageant la même liaison (principe d'autonomie).
6. L'adjonction du mode AMRT est modulaire et nécessite peu de changement dans l'équipement des stations d'émission au sol par rapport au mode d'émission en continu (principe de modularité).
7. L'adjonction du mode AMRT ne remet pas en cause la compatibilité avec les récepteurs au sol conçus pour recevoir le signal DVB-S.
8. Les paramètres de base, longueur de trames, temps de garde et protocole de synchronisation, permettent une mise en oeuvre simple du module embarqué, sans perte significative en efficacité (principe de complexité minimale).

Conformément à l'invention, le dispositif d'émission d'informations numériques par satellite à partir de plusieurs stations au sol est caractérisé par :
- au moins un ensemble de liaisons envoyant des informations numériques formatées en paquets vers le satellite, sur au moins deux fréquences différentes,
- au moins un module embarqué à bord du satellite qui reçoit, multiplexe et reformate les informations sur une liaison en descente unique,
- au moins l'une des liaisons qui fonctionnent en mode à Accès Multiple à Répartition dans le Temps (AMRT).

Conformément à d'autres caractéristiques de l'invention :
- le signal émis par le satellite est un multiplex temporel contenant toutes les informations utiles, individuellement émises vers le satellite par plusieurs stations au sol, et est rigoureusement compatible aux récepteurs conçus pour la réception de signaux selon la norme de diffusion de télévision numérique par satellites dans les bandes Ku, dite DVB-S,
- une ou plusieurs des liaisons sur le trajet montant d'un système d'émission d'une station au sol sont configurées en transmissions AMRT, alors que les autres liaisons restent en mode de transmission continue,
- la configuration en AMRT ou en continu d'une liaison montante est effectuée sans que le fonctionnement des autres liaisons en soit affecté, en réalisant un accroissement de débit de transmission sur le trajet montant d'une liaison par rapport au débit en fonctionnement en mode continu sur cette liaison, et cet accroissement servant à accommoder les fonctions de préambule et de temps de garde de la transmission en mode par salves,
- la structure des paquets MPEG2 du signal émis par le satellite est utilisée de la façon suivante pour la définition des trames AMRT, ces trames AMRT étant générées à bord du satellite :
   - en l'absence de données reçues, le multiplexeur génère des paquets de bourrage dont l'identification de programme (PID) prend une valeur unique propre à chaque liaison montante,
   - quand une liaison montante est configurée en mode AMRT, le multiplexeur numérote, de façon cyclique, l'ordre des paquets de bourrage générés, un champ de 5 bits, de numérotage des paquets de bourrage, dans la partie utile du paquet MPEG2 est utilisé à cet effet,
   - quand une salve d'une station montante, parmi n stations, arrive au satellite en phase avec une portion de trame AMRT, les paquets DVB de cette salve se substituent aux paquets de bourrage pour cette portion de trame AMRT.

- l'activation ou l'arrêt de la transmission d'une station AMRT est effectué de manière autonome sans coordination avec les autres stations partageant la même liaison,
- une salve brève et des paquets déterminés sont utilisés pour permettre aux stations au sol de faire l'acquisition rapide, fiable et précise selon le protocole entre celles-ci et la partie de réception du module embarqué,
- les paramètres de base, longueur de tramés, temps de garde et protocole de synchronisation et analogues, sont choisis de façon à permettre une mise en oeuvre simple du module embarqué,
- la structure de trame émise par le satellite comporte un nombre fixe, égal à par exemple 48 paquets DVB,
- un ratio de 52/48 est utilisé pour l'accroissement de débit sur les liaisons montantes reconfigurées en mode AMRT,
- l'adjonction du mode AMRT est modulaire, de sorte que peu de changements sont effectués dans l'équipement des stations d'émission au sol par rapport au mode d'émission en continu,
- on réalise une compatibilité du signal multiplexé sur la liaison descendante avec les récepteurs au sol conçus pour recevoir des signaux conformes à la norme DVB-S avec l'adjonction du mode AMRT.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 illustre une structure de stations d'émission à terre.

La fig. 2 représente une structure à bord du satellite.

La fig. 3a montre la structure de trame, d'une part, en mode continu et, d'autre part, en mode AMRT.

La fig. 3b illustre des détails des salves AMRT.

La fig. 4 représente l'utilisation de la structure des paquets DVB/MPEG2.

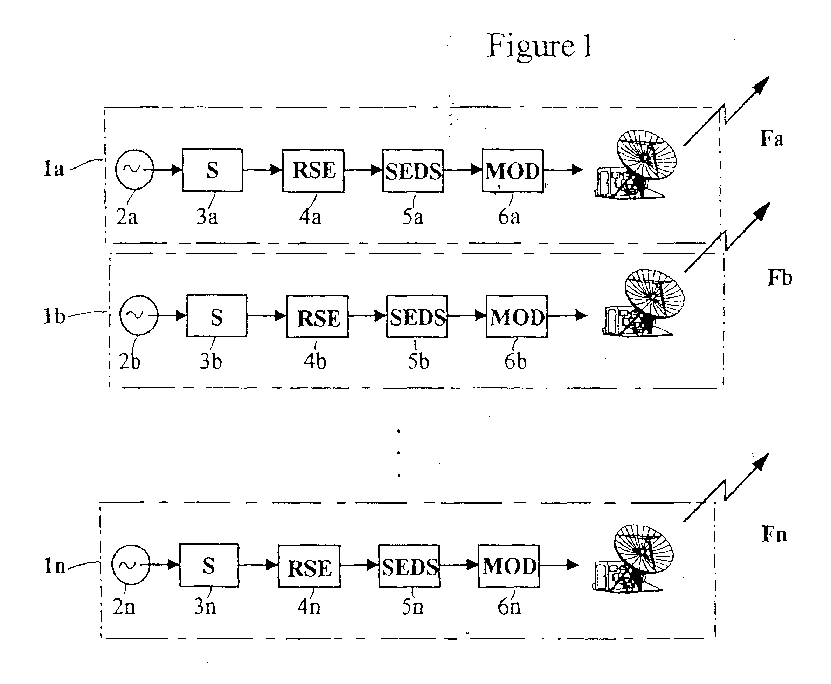

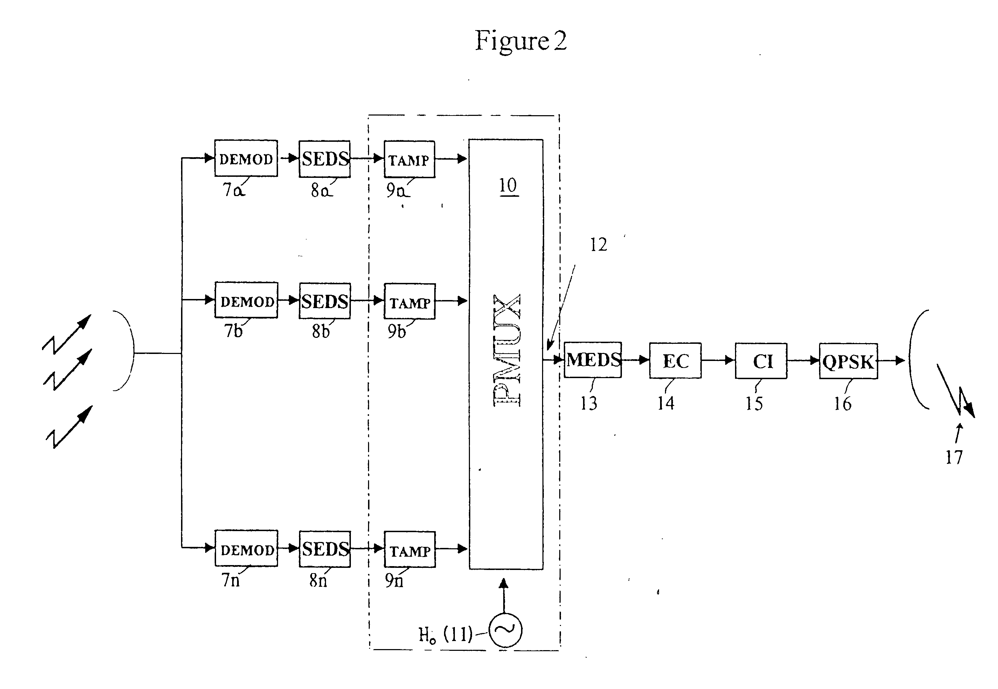

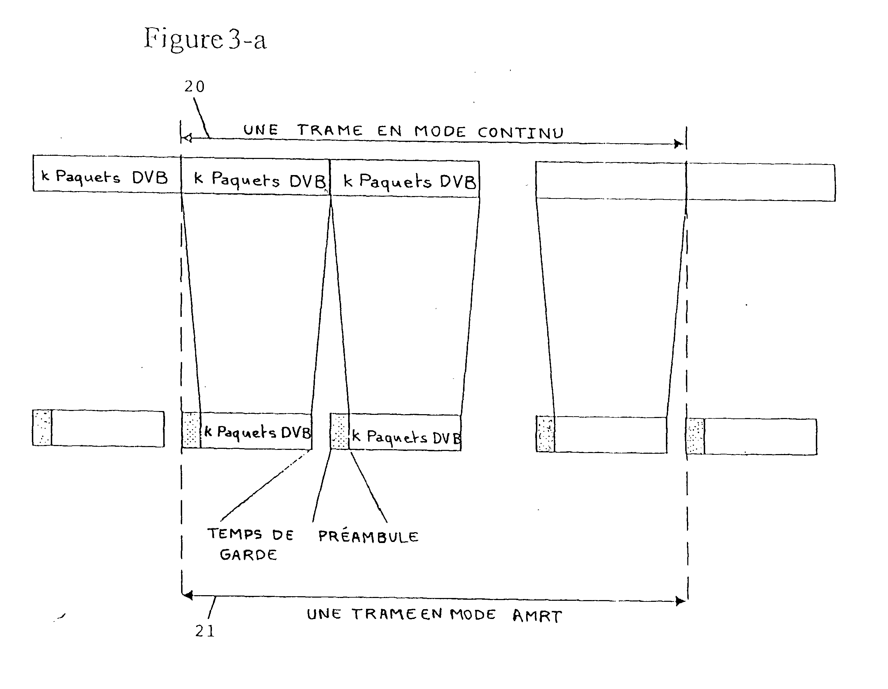

Comme indiqué ci-dessus, la présente invention concerne un perfectionnement de la réalisation de la demande de brevet No 96 11431 dont les fig. 1 et 2 annexées correspondent aux fig. 1 et 2 de cette demande.

A la fig. 1, chaque station d'émission à terre 1a, 1b ... 1n comporte une source S, désignée par 3a, 3b ... 3n, générant des paquets de 188 octets débutant par un octet de synchronisation dont la valeur est fixe et égale à 0 x 47 (47 en hexadécimal) et par trois octets d'entête, suivie de 184 octets de charge utile.

Les diverses sources S sont pilotées par des horloges individuelles désignées par 2a, 2b ... 2n, qui ne sont pas nécessairement synchrones et dont le dénominateur commun est l'horloge extraite du signal numérique reçu sur le trajet descendant (point 17, Fig. 2).

Les paquets en sortie des sources S sont traités par des blocs RSE d'encodage de Reed-Solomon 4a, 4b ... 4n, ces blocs étant rigoureusement conformes à la norme DVB et étant, dans la réalisation décrite à titre d'exemple, reliés à des blocs SEDS formant embrouilleurs de dispersion d'énergie simplifiés, désignés par 5a, 5b ... 5n. Ces blocs ne sont d'ailleurs pas nécessairement requis.

Le flux binaire résultant des blocs d'embrouillage SEDS est modulé, par exemple en quadriphase (QPSK) ou toute modulation binaire adéquate, selon les besoins spécifiques soit en conservation de bande passante, soit en conservation d'énergie par des modulateurs MOD désignés par 6a, 6b ... 6n. Les fréquences centrales Fa, Fb ... Fn d'émission des stations sont assignées de façon statique en fonction du banc de démodulateurs embarqués (Fig. 2).

A la fig. 2, les sorties des démodulateurs DEMOD, désignés par 7a, 7b ... 7n, adaptés aux modulateurs MOD de la fig. 1, sont reliées respectivement à des blocs SEDD formant des désembrouilleurs de dispersion d'énergie simplifiés 8a, 8b ... 8n.

Les blocs SEDD 8a, 8b ... 8n sont reliés à des tampons d'entrée/sortie (TAMP) désignés par 9a, 9b ... 9n de tailles égales au moins à deux paquets DVB, dont les fonctions sont :
- d'annuler les différences entre les horloges d'écriture récupérées par les démodulateurs 7a, 7b ... 7n à partir des signaux en montée, d'une part, et, d'autre part, les horloges de lecture dérivées à partir de l'horloge embarquée Ho désignée par 11 et fonctionnant en asynchronisme avec toute horloge terrestre. L'horloge 11 pilote l'ensemble embarqué qui commence par un multiplexeur PMUX désigné par 10 ;
- d'aligner les paquets issus de la sortie de chacun des blocs SEDD qui ne sont pas nécessairement en phase, au niveau des bits, des octets, et début des paquets, compte tenu de l'absence de synchronisation inter-station.

Le multiplexeur PMUX 10 lit de façon cyclique les tampons TAMP et, si ceux-ci contiennent un paquet complet au moment de la lecture, transfère ce paquet vers la sortie unique à grand débit 12 ; sinon, le multiplexeur 10 insère un paquet spécial dénommé "dummy paquet". Dans cette opération, le multiplexeur 10 est piloté par l'horloge Ho.

Un embrouilleur modifié MEDS désigné par 13 et qui est relié à la sortie du multiplexeur 10 opère sur des blocs de 204 octets en sortie 12 du multiplexeur. L'action de l'embrouilleur consiste à effectuer une opération OU Exclusif (XOR) entre les paquets de 204 octets en sortie du multiplexeur et des séquences pseudo-aléatoires également de 204 octets.

L'opération d'embrouillage générée par l'embrouilleur modifié MEDS produit un flux de paquets identique à celui obtenu avec le schéma d'origine du DVB-S, dans lequel le codage de Reed-Solomon est appliqué à la sortie de l'embrouilleur DVB-S. Par conséquent, la sortie du MEDS 13 peut être connectée directement au bloc d'entrelaçage convolutif (EC) du schéma DVB, ici désigné par 14. Les blocs de codage interne (CI) et de modulation quadriphase (QPSK), désignés par 15 et 16 respectivement, sont rigoureusement conformes à la spécification DVB-S. Le formatage des informations ainsi réalisé en sortie du bloc de modulation 16 est compatible avec tout récepteur désigné par 17 prévu pour recevoir un signal conforme à la norme DVB-S.

La description qui suit concerne les paramètres et principes de base du système AMRT de la présente invention.

Quand une liaison est reconfigurée du mode de fonctionnement continu en un mode AMRT, les stations d'émission à terre 1a, 1b ... 1n émettant sur cette liaison augmentent le débit instantané en sortie de leur modulateur d'un ratio fixe, quel que soit le débit du fonctionnement en mode continu de la liaison. Le choix d'un ratio fixe minimise le nombre de fréquences d'horloge dans le système.

Dans la réalisation selon la présente invention, ce ratio est choisi égal à 52/48 par rapport à un fonctionnement en mode continu, soit un surcroît de 8,3 %.

La séparation des fréquences centrales des stations à terre 1a, 1b ... 1n du système a été choisie assez large pour tenir compte de l'élargissement spectral résultant de cette augmentation de débit.

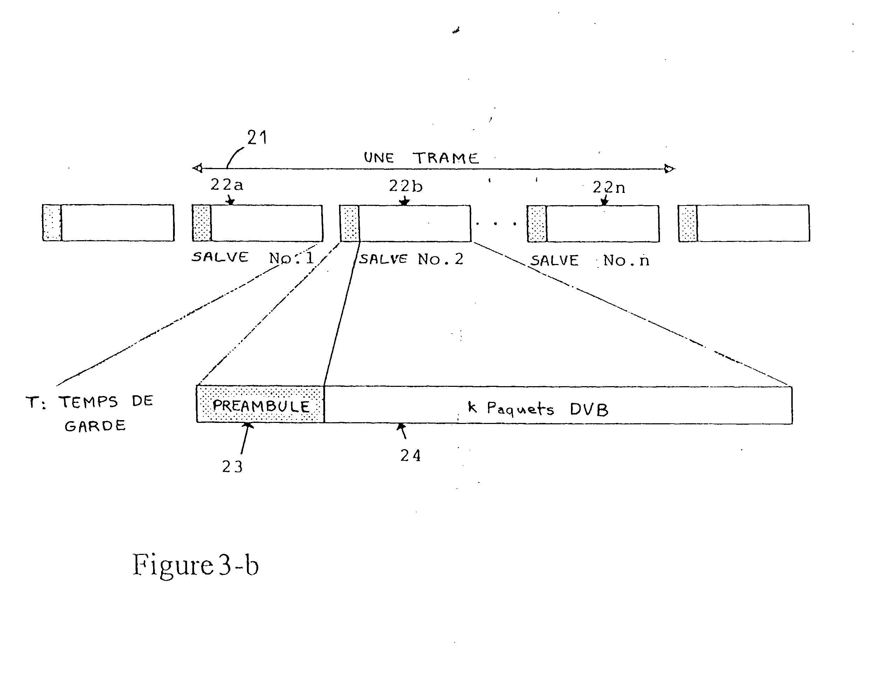

Le surcroît ou l'excédent de débit (8,3 %) ci-dessous sert à accommoder les temps de garde entre salves en provenance de stations à terre différentes et à accommoder les émissions de préambule de synchronisation en début de chaque salve, dans la structure de trame suivante (fig. 3a et 3b).

On a ainsi représenté, à la partie supérieure de la fig. 3a, une structure de trame en mode continu, la partie inférieure de la figure illustrant une structure de trame en mode AMRT.

Selon le dessin, une trame en continu 20 sur la liaison montante de la fig. 1 comporte 48 tranches temporelles, chacune de ces tranches étant égale au temps de transmission en montée d'un paquet DVB. Les trames AMRT 21 sur la liaison montante de la fig. 1 comportent chacune 52 tranches temporelles ou 52 paquets DVB.

La fig. 3b, qui illustre en détail les salves AMRT, montre que, selon l'invention, des diverses stations 1a, 1b ... 1n de la fig. 1, qui sont alors de type AMRT, émettent des salves respectivement référencées 22a, 22b ... 22n à savoir des salves No 1, No 2 ... No n qui sont séparées les unes des autres d'un temps de garde T. Comme représenté en partie basse de la fig. 3b, chaque salve comporte un préambule 23 (pour l'aide à la synchronisation de fréquence et d'horloge des démodulateurs embarqués) suivi d'un nombre entier k de paquets DVB 24.

Le nombre entier k de paquets DVB est commun à toutes les salves de toutes les stations AMRT accédant à une même fréquence. Cette contrainte est motivée par le souci de simplification des fonctions logiques embarquées pour le traitement du mode AMRT.

La période d'une trame est aussi égale au temps nécessaire pour extraire 48 paquets DVB du tampon (TAMP) 9a, 9b ... 9n à bord du satellite (voir fig. 2).

Le nombre n de stations AMRT accédant à une liaison doit être un diviseur entier de 48. Le choix du nombre 48 permet, en dehors d'autres contraintes, le partage d'une liaison par 2, 3, 4, 6, 8, 12, 16, 24 et 48 stations qui sont des diviseurs de 48.

Le temps de garde T entre les salves est fonction du nombre n de stations AMRT accédant à une liaison. Plus ce nombre est grand, plus le temps de garde T est petit. Le temps de garde T est tel que n x T = 4 paquets DVB, par exemple.

Le nombre n maximum de stations pouvant partager une liaison montante est limité par le temps miminum réservé au temps de garde T et à la transmission du préambule, par les contraintes de taille du tampon dans les récepteurs au sol 17 de la fig. 2 et par leur tolérance à la perturbation créée par la temporisation des paquets au moment de l'émission au sol. Dans une réalisation concrète des modules embarqués sur satellites, ce maximum a été fixé à 6.

Quand l'une des stations 1a, 1b ... 1n de la fig. 1 doit être utilisée en mode AMRT, le mode de fonctionnement par salves est activé pour le démodulateur 7a, 7b ... 7n correspondant. Cette activation se fait par télécommande à partir du sol via une liaison de télécommande de la plate-forme satellite.

La vitesse de lecture des tampons 9a, 9b ... 9n par le multiplexeur de paquets (PMUX) est inchangée quel que soit le mode, AMRT ou continu. L'activation du mode AMRT sur une liaison donnée n'influe donc pas sur le fonctionnement des stations des autres liaisons.

La suite de la présente description est relative à l'utilisation de la structure des paquets MPEG2 pour définir les trames AMRT générées à bord du satellite.

Dans la présente invention, le module embarqué de la fig. 2 génère tous les signaux de synchronisation nécessaires au fonctionnement en mode AMRT. Ceci est réalisé par l'utilisation particulière des structures de paquets MPEG2, expliquées ci-après.

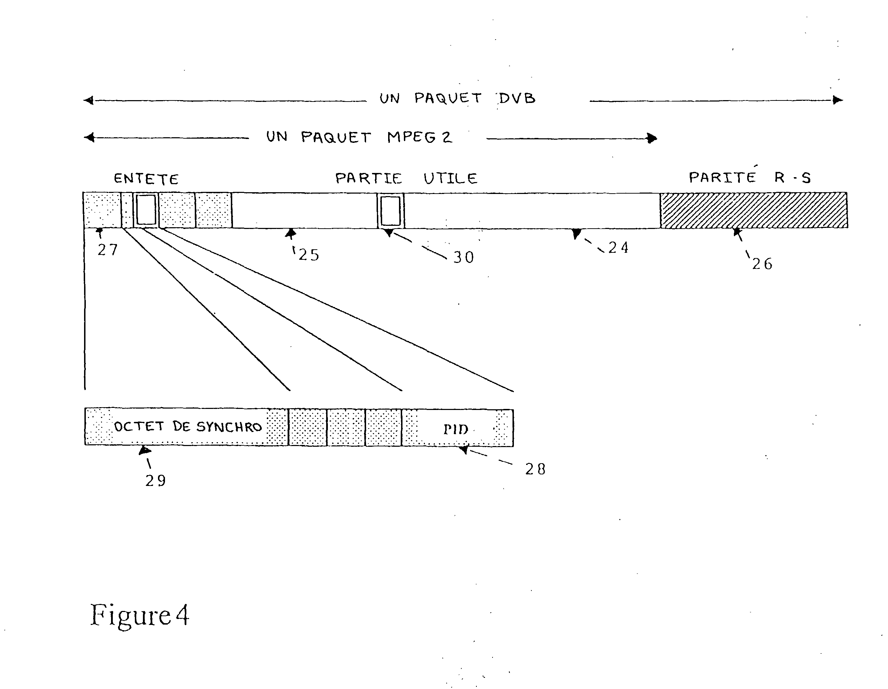

Comme on le voit à la fig. 4, un paquet DVB 24 des fig. 3a et 3b comprend un paquet MPEG2 25, suivi de 16 octets de parité Reed Solomon référencés 26.

Les paquets MPEG2 ont une structure définie par la norme ISO/IEC 13818-1, dont les éléments essentiels à la présente invention sont schématisés à la fig. 4. On note à cette figure que chaque paquet MPEG2 comporte une entête 27 de 4 octets contenant plusieurs champs bien définis suivis d'une partie utile de 184 octets. En particulier, le champ PID 28 (Program Identification) de 13 bits de l'entête 27 et qui est disposé après l'octet de synchronisation 29 est destiné à faire la distinction entre les services transportés dans un même multiplex, certaines valeurs de ce champ étant utilisées pour indiquer la liaison montante.

Le champ PID est utilisé dans cette invention de deux manières spécifiques pour réaliser les fonctions nécessaires à la gestion du mode AMRT qui sont le protocole de télémétrie, d'une part, et la gestion de synchronisation, d'autre part. Ces fonctions sont successivement détaillées ci-dessous.

Le protocole de télémétrie est un mécanisme qui permet aux opérateurs des stations à terre de connaître, en quasi temps réel, les paramètres opérationnels relatifs à leurs propres liaisons en montée, et seulement à celles-ci, ceci sans faire appel aux fonctions de télémétrie de la plateforme satellite qui, elles, sont sous le seul contrôle de l'opérateur du satellite.

Ce protocole est basé sur les règles suivantes :
1. La station désirant connaître ses données de télémétrie envoie un paquet, dit de requête de données de télémétrie, qui est identifiable par le module embarqué à l'aide d'un PID réservé uniquement à cet usage. Ce PID peut être, par exemple OFFO (en hexadécimal), valeur qui maximise sa distance euclidienne avec les PID les plus communément utilisés pour les fonctions systèmes selon les normes MPEG2 et DVB.
2. Le paquet de requête de télémétrie contient également un champ de 5 bits dans la partie utile du paquet MPEG2, en identifiant uniquement la station AMRT transmettant sur la liaison en montée en question.
3. En réponse à une requête de données de télémétrie, le logiciel embarqué exécute les fonctions suivantes : (a) il remplit la partie utile du paquet de requête de télémétrie avec les données de télémétrie relatives à la liaison montante en question, (b) optionnellement, il remplace le PID de ce paquet par le PID dont la représentation en binaire est 00001cccbbbbb et, dans laquelle représentation, les 5 derniers bits bbbbb constituent l'identificateur de la station AMRT décrite ci-dessus et le champ de 3 bits ccc constitue l'identificateur de la liaison de montée (maximum 8). La fonction optionnelle (b) n'est pas absolument nécessaire pour identifier, sur la liaison en descente, le destinataire du paquet de télémétrie. Cependant, elle simplifie cette identification qui se réduit à une détection des paquets de télémétrie basée uniquement sur la recherche de concordance du PID.

Une réalisation possible de la syntaxe des paquets de requête de télémétrie est donnée ci-dessous :

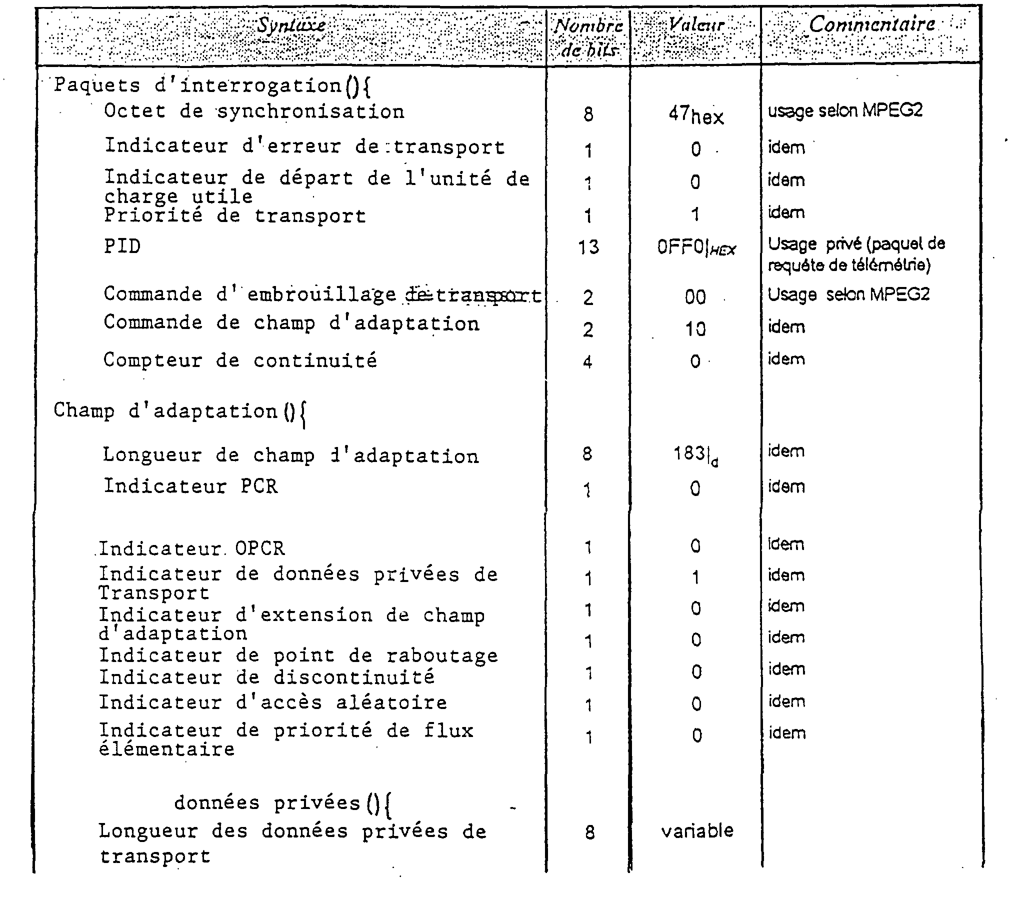

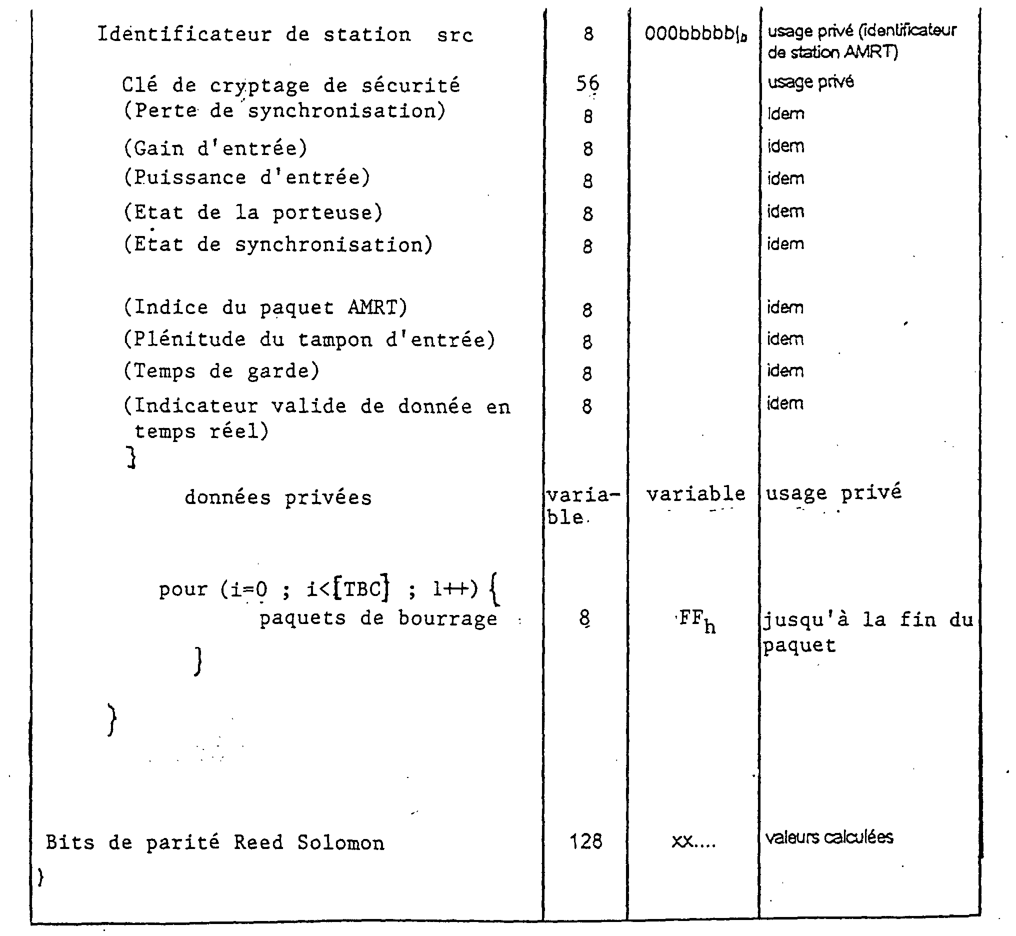

Une réalisation possible de la syntaxe d'un paquet de télémétrie est donnée en exemple ci-dessous

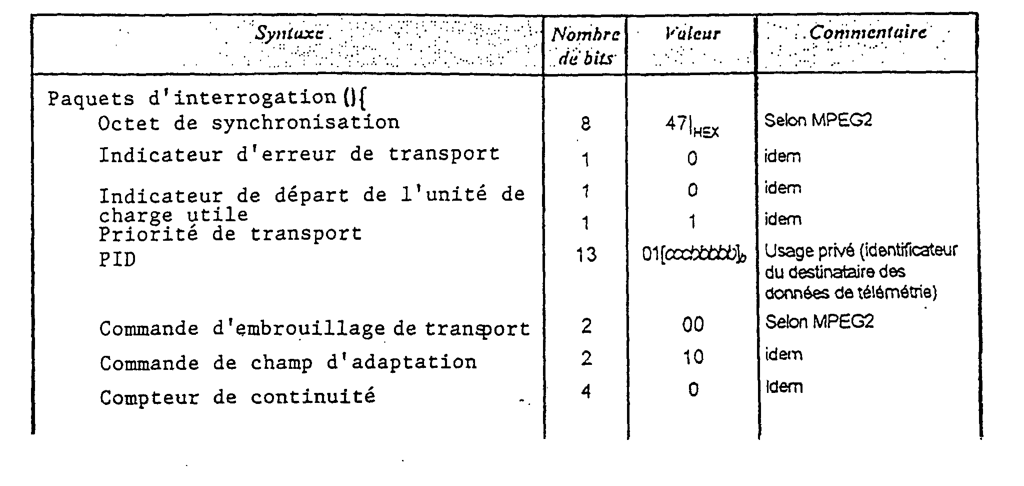

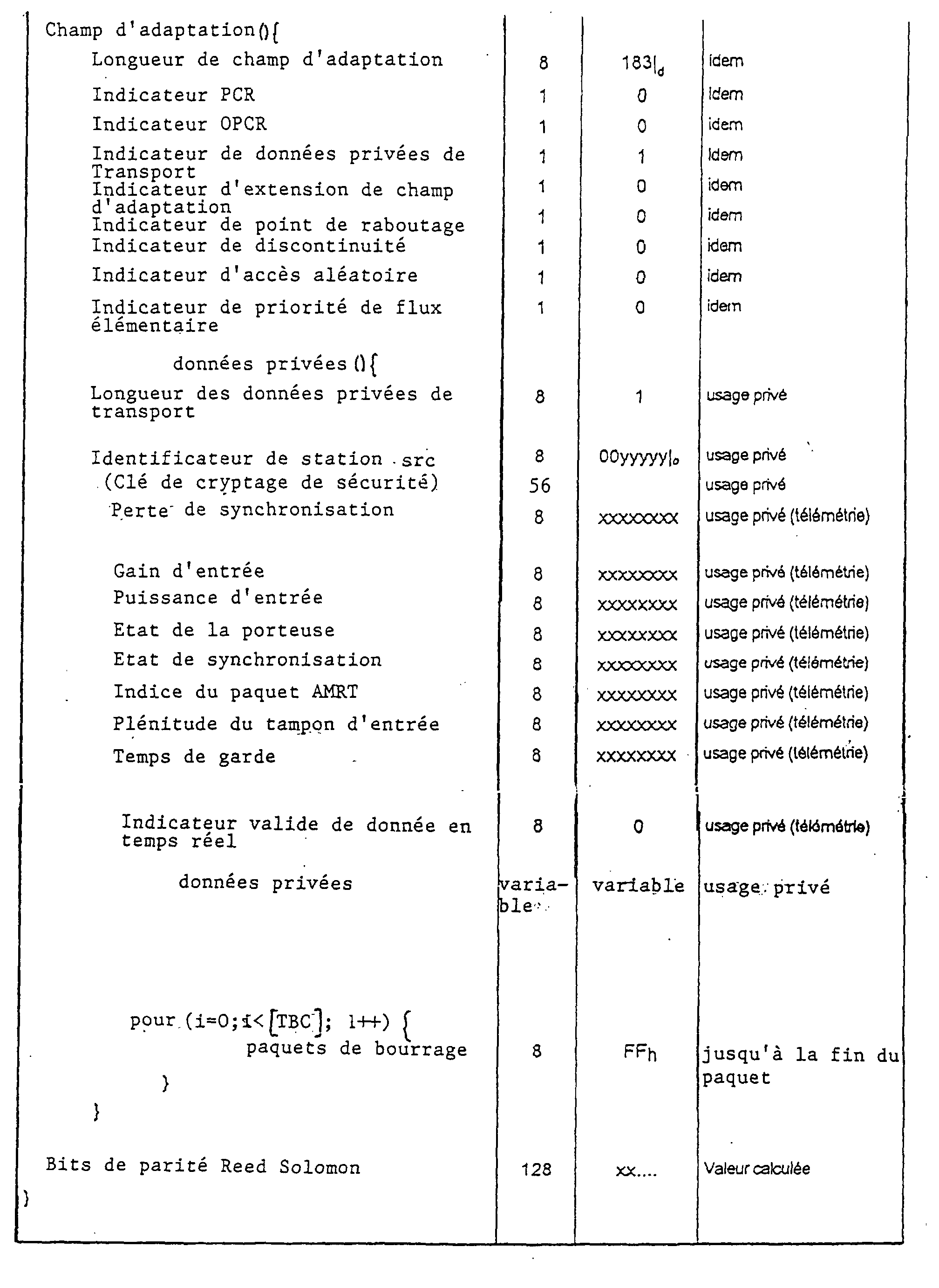

La génération de trame AMRT est, dans cette invention, faite de la façon suivante en se référant à la fig. 4.

En l'absence de données reçues, le multiplexeur 10 de la fig. 2 génère des paquets de bourrage dont le PID prend une valeur unique propre à chaque liaison montante. Ces PID sont réservés et ne servent qu'à cet usage (indicateur de liaison montante).

Quand une liaison montante est configurée en mode AMRT, le multiplexeur numérote, de façon cyclique, de 1 à 48, l'ordre des paquets de bourrage générés. Un champ 30 de 5 bits de numérotage des paquets de bourrage, dans la partie utile du paquet MPEG2, est utilisé à cet effet (indicateur de trame).

Quand une salve d'une station montante, parmi n stations, arrive au satellite en phase avec une portion de trame AMRT, les paquets DVB de cette salve se substituent aux paquets de bourrage pour cette portion de trame AMRT. Cette substitution permet aux autres stations de déterminer que cette portion de trame n'est plus libre, par le fait que le PID des paquets de cette portion de trame n'est plus un indicateur de liaison montante.

Cette réalisation permet de :
- définir des trames AMRT, une par liaison montante,
- indiquer aux stations qu'une liaison montante donnée est disponible en mode AMRT,
- indiquer, aux stations AMRT voulant accéder à une liaison, les portions de trame restant libres.

Le protocole d'acquisition de trame AMRT est expliqué ci-après.

Le protocole d'acquisition de trame est la procédure que doit exécuter toute station qui transmet pour la première fois sur une liaison AMRT pour calculer son instant d'émission en se basant sur la base de temps et la trame AMRT qu'elle reçoit sur la liaison descendante.

Cette procédure doit être rapide, fiable, précise et ne doit pas nécessiter de coordination entre des stations partageant la même liaison. Dans la présente invention, ceci est réalisé par l'application des deux techniques de base suivantes :
1. L'utilisation, par les stations, d'une salve "brève", volontairement décalée dans le temps.
2. L'utilisation, par les stations, d'informations de base de temps codées avec précision par le module embarqué et renvoyées au sol en réponse à la réception d'une trame brève.

Le fonctionnement du dispositif est détaillé ci-après :
- La station détermine la portion de trame AMRT par rapport à laquelle sa salve doit arriver en phase à bord du satellite. Cette détermination est basée sur sa connaissance du PID des paquets de bourrage de la liaison en question. La portion de trame visée commence par le premier paquet de bourrage que sa salve doit remplacer dans la trame AMRT. Le numéro de ce paquet est supposé connu.
- A partir d'une connaissance initiale approximative de sa distance par rapport au satellite, la station calcule son instant d'émission nominal et se prépare à transmettre une salve brève.
- Une salve brève comprend le préambule et un nombre de paquets DVB qui est plus petit, d'au moins deux paquets, qu'une salve nominale, et dont le dernier paquet est un paquet de requête d'information de télémétrie.
- La station émet la salve brève avec un retard, par rapport à l'instant nominal calculé, égal au temps pour transmettre un paquet DVB en montée. Cette réalisation garantit que la salve brève ne dépassera pas les limites de la portion de trame visée, dans un sens ou dans l'autre, pour autant que l'incertitude initiale sur la distance au satellite soit inférieure à ± Δ, Δ étant la distance parcourue par la lumière pendant le temps égal à celui d'un paquet DVB plus la moitié du temps T de garde.
- En réponse à une trame brève reçue, le module embarqué substitue les paquets de bourrage correspondants par les paquets reçus. Dans le dernier paquet de la salve reçue qui est un paquet de télémétrie, le module embarqué insère un champ d'information, dit de mesure de temps de garde (Guard-time measurement), qui contient un codage du temps écoulé entre l'instant d'arrivée du premier octet du premier paquet de la salve brève et l'instant le plus proche correspondant au milieu d'un paquet DVB.
- A la réception de la salve brève en descente, en comparant la position de cette salve dans la portion de trame AMRT visée et en décodant l'information temporelle contenue dans le dernier paquet, la station peut calculer avec précision son instant d'émission en nominal. Elle peut dès lors commencer sa phase d'émission des paquets de trafic.

Cette procédure est rapide car l'acquisition de la trame se fait dans un seul cycle AMRT, soit environ 34 millisecondes pour une liaison montante à 2,292 Mbit/s, ou environ 11 millisecondes pour une liaison montante à 7,448 Mbit/s (débits le plus faible et le plus élevé, respectivement dans des systèmes qui seront embarqués dans des satellites en cours de réalisation).

Cette procédure est fiable car elle tolère une imprécision de connaissance initiale de la distance au satellite, au moins de ± Δ c'est-à-dire ± 80 km (paramètre calculé pour le cas le plus critique qui est celui de 6 stations partageant une liaison en montée de débit le plus élevé).

Cette procédure est précise car elle permet, après acquisition, la connaissance de la distance de la station au satellite égale à la précision de codage des informations temporelles réalisée sur le module embarqué. Cette précision peut être de l'ordre du bit, soit l'équivalent de 120 mètres, ou de l'ordre de l'octet, soit l'équivalent du kilomètre, pour le débit en montée le plus faible (2,292 Mbit/s). Pour des débits en montée plus élevés, la précision atteint 40 mètres avec un codage au niveau du bit et de l'ordre de 300 mètres avec un codage au niveau de l'octet. Une grande précision minimise la fréquence des signaux de diagnostic de distance que les stations doivent émettre vers le satellite pour le maintien de synchronisation de trame selon le protocole ci-dessous.

Ce protocole de maintien de synchronisation de trame est la procédure que doit exécuter régulièrement toute station en phase de trafic pour recaler son instant d'émission afin d'éviter un empiètement sur les fenêtres d'émission des autres stations. Ce protocole est nécessaire à cause du mouvement lent du satellite et d'autres phénomènes de lente dérive d'horloge dans le système.

Dans le cas d'un partage d'une liaison en montée par le maximum de stations, c'est-à-dire 6 stations, le temps réservé au total pour le préambule et le temps de garde n'est que de 4/6 = 0,667 paquet DVB. Sachant que le préambule requiert un tiers du temps de transmission d'un paquet DVB, le temps de garde est dans ce cas d'environ un tiers du temps de transmission d'un paquet DVB.

Dans le cas d'une liaison en montée de 7,333 Mbit/s, ce temps de garde est calculé égal à l'équivalent de 20 km. Ceci est insuffisant pour empêcher un empiètement d'une salve sur une autre, compte tenu uniquement du mouvement du satellite qui est couramment maintenu dans un cube de 50 km de côté.

La présente invention résout le problème ci-dessus par l'utilisation d'un paquet spécial, dit paquet de télémétrie, qui est régulièrement inséré dans le flux de trafic par la station AMRT. En réponse à ce paquet, le module embarqué fournit l'information temporelle codée de la même manière que dans le cas d'une salve brève. Après décodage de cette information, la station AMRT recale son instant d'émission si nécessaire pour tenir compte des dérives éventuellement détectées.

Etant donné la longueur du temps de garde et la teneur des phénomènes de dérive, les paquets de télémétrie ne sont transmis qu'à une fréquence très faible (par exemple, un paquet par heure).

## Revendications

1. Dispositif d'émission d'informations numériques par satellite à partir de plusieurs stations au sol, comprenant
- au moins un ensemble de liaison montantes (1a, 1b...1n) destiné à envoyer des informations numériques formatées en paquets vers le satellite, sur au moins deux fréquences différentes;
- au moins un module (10) embarqué à bord d'un satellite adapté pour recevoir, multiplexer et reformater les informations sur une liaison en descente unique ;
caractérisé en ce qu'au moins l'une des liaisons montantes (la, 1b...1n) fonctionne en mode Accès Multiple à Répartition dans le Temps dit AMRT et au moins une autre liaison montante fonctionne en mode de transmission continue.

2. Dispositif selon la revendication 1, caractérisé en ce qu'une liaison montante précitée est configurable en mode AMRT ou en mode de transmission continue.

3. Dispositif selon l'une des revendications 1 ou 2, caractérisé en ce que le signal émis par le satellite est un multiplex temporel contenant toutes les informations utiles, individuellement émises vers le satellite par plusieurs stations au sol, et est rigoureusement compatible aux récepteurs conçus pour la réception de signaux selon la norme de diffusion de télévision numérique par satellites dans les bandes Ku, dite DVB-S.

4. Dispositif selon l'une des revendications 1 à 3, caractérisé en ce que la configuration en AMRT ou en continu d'une liaison montante est effectuée sans que le fonctionnement des autres liaisons en soit affecté, en réalisant un accroissement de débit de transmission sur le trajet montant d'une liaison par rapport au débit en fonctionnement en mode de transmission continue sur cette liaison, et cet accroissement servant à accommoder les fonctions de préambule et de temps de garde de la transmission en mode AMRT.

5. Dispositif selon l'une des revendications 1 à 4, caractérisé en ce que la structure des paquets MPEG2 du signal émis par le satellite est utilisée de la façon suivante pour la définition des trames AMRT, ces trames AMRT étant générées à bord du satellite :
- en l'absence de données reçues, le multiplexeur génère des paquets de bourrage dont l'identification de programme (PID) prend une valeur unique propre à chaque liaison montante,
- quand une liaison montante est configurée en mode AMRT, le multiplexeur numérote, de façon cyclique, l'ordre des paquets de bourrage générés, un champ de 5 bits, de numérotage des paquets de bourrage, dans la partie utile du paquet MPEG2 est utilisé à cet effet,
- quand une salve d'une station montante, parmi n stations, arrive au satellite en phase avec une portion de trame AMRT, les paquets DVB de cette salve se substituent aux paquets de bourrage pour cette portion de trame AMRT.

6. Dispositif selon l'une des revendications 1 à 5, caractérisé en ce que l'activation ou l'arrêt de la transmission d'une station AMRT est effectué de manière autonome sans coordination avec les autres stations partageant la même liaison.

7. Dispositif selon l'une des revendications 1 à 6, caractérisé en ce qu'une salve brève et des paquets déterminés sont utilisés pour permettre aux stations au sol de faire l'acquisition rapide, fiable et précise selon le protocole entre celles-ci et la partie de réception du module embarqué.

8. Dispositif selon l'une des revendications 1 à 7, caractérisé en ce que les paramètres de base, longueur de trame, temps de garde et protocole de synchronisation et analogues, sont choisis de façon à permettre une mise en oeuvre simple du module embarqué.

9. Dispositif selon la revendication 8, caractérisé en ce que la structure de trame émise par le satellite comporte un nombre fixe, égal à par exemple 48 paquets DVB.

10. Dispositif selon la revendication 9, caractérisé en ce qu'un ratio de 52/48 est utilisé pour l'accroissement de débit sur les liaisons montantes reconfigurées en mode AMRT.

11. Dispositif selon l'une des revendications 1 à 10, caractérisé en ce que l'adjonction du mode AMRT est modulaire, de sorte que peu de changements sont effectués dans l'équipement des stations d'émission au sol par rapport au mode de transmission continue.

12. Dispositif selon l'une des revendications 1 à 11, caractérisé en ce qu'on réalise une compatibilité du signal multiplexé sur la liaison descendante avec les récepteurs au sol conçus pour recevoir des signaux conformes à la norme DVB-S avec l'adjonction du mode AMRT.

13. Dispositif selon l'une des revendications 1 à 12, caractérisé en ce que la gestion du mode AMRT est assurée par un champ PID d'identification.

14. Dispositif selon l'une des revendications 1 à 13, caractérisé en ce que le champ PID est utilisé dans le protocole de télémétrie.

15. Dispositif selon l'une des revendications 1 à 14, caractérisé en ce que le champ PID est utilisé dans la gestion de synchronisation.

## Patentansprüche

1. Vorrichtung zum Übertragen digitaler Informationen über Satellit von mehreren Bodenstationen beinhaltend:
mindestens eine Menge aufsteigender Verbindungen (1a, 1b...1n), dazu bestimmt, formatierte digitale Informationen in Paketen zum Satelliten auf wenigstens zwei voneinander verschiedenen Frequenzen zu übertragen; mindestens ein Modul (10), mitgeführt an Bord eines Satelliten, das geeignet ist die Informationen auf einer einzigen absteigenden Verbindung zu empfangen, zu multiplexen und umzuformatieren;
dadurch gekennzeichnet, dass wenigstens eine der aufsteigenden Verbindungen (1a, 1b...1n) in dem Modus des mehrfachen Zugangs in zeitlicher Verteilung, genannt AMRT, und wenigstens eine andere aufsteigende Verbindung in dem Modus der kontinuierlichen Übertragung arbeitet.

2. Vorrichtung nach Anspruch 1, dadurch gekennzeichnet, dass eine vorgenannte aufsteigende Verbindung im Modus der AMRT oder im Modus der kontinuierlichen Übertragung konfigurierbar ist.

3. Vorrichtung nach einem der Ansprüche 1 oder 2, dadurch gekennzeichnet, dass das von dem Satelliten ausgesandte Signal ein zeitlicher Multiplex mit allen nützlichen Informationen ist, die einzeln von mehreren Bodenstationen zum Satelliten ausgesandt werden und eindeutig kompatibel zu den Empfängern ist, die bestimmt sind für den Empfang von Signalen nach der Norm für die Ausstrahlung digitalen Fernsehens durch Satelliten in den Bändern Ku, DVB-S genannt.

4. Vorrichtung nach einem der Ansprüche 1 bis 3, dadurch gekennzeichnet, dass die Konfigurierung in AMRT oder in kontinuierlicher Übertragung einer aufsteigenden Verbindung ausgeführt wird, ohne dass die Arbeitsweise der anderen Verbindungen davon berührt wird, wozu ein Anstieg des Durchflusses von Information auf dem aufsteigenden Weg einer Verbindung gegenüber dem Durchfluss in kontinuierlicher Arbeitsweise auf dieser Verbindung durchgeführt wird, und dieser Anstieg dazu dient, die Funktion des Vorspannes und der Bereitschaftszeit der Übertragung im Modus AMRT anzupassen.

5. Vorrichtung nach einem der Ansprüche 1 bis 4, dadurch gekennzeichnet, dass die Struktur der MPEG2-Pakete des vom Satelliten ausgesandten Signals in der nachfolgenden Weise für die Definition der AMRT-Raster benutzt wird, wobei diese AMRT-Raster an Bord des Satelliten erzeugt werden:
- in Abwesenheit empfangener Daten generiert der Multipexer Füllpakete, deren Programm-Identifikation (PID) einen zu jeder aufsteigenden Verbindung gehörenden, einzigen Wert annimmt,
- wenn eine aufsteigende Verbindung im Modus AMRT konfiguriert ist nummeriert der Multiplexer zyklisch die Reihenfolge der erzeugten Füllpakete. Ein Feld von fünf Bits für das Nummerieren der Füllpakete in dem Nutzteil des MPEG2-Paketes wird hierzu benutzt,
- wenn eine Salve von einer aufsteigenden Station aus den n-Stationen bei dem Satelliten in Phase mit einem Strick des AMRT-Rasters ankommt, substituieren die DVB-Pakete von dieser Salve die Füllpakete für diesen Abschnitt des AMRT-Rasters.

6. Vorrichtung nach einem der Ansprüche 1 bis 5, dadurch gekennzeichnet, dass die Aktivierung oder das Anhalten der Übertragung einer AMRT-Station in autonomer Weise durchgeführt wird, ohne Koordination mit den anderen Stationen, die die gleiche Verbindung teilen.

7. Vorrichtung nach einem der Ansprüche 1 bis 6, dadurch gekennzeichnet, dass eine kurze Salve und bestimmte Pakete benutzt werden, um der Bodenstation zu ermöglichen, eine schnelle, zuverlässige und präzise Erfassung nach dem Protokoll zwischen dieser und dem Empfangsteil des mitgeführten Moduls durchzuführen.

8. Vorrichtung nach einem der Ansprüche 1 bis 7, dadurch gekennzeichnet, dass die Grundparameter, Rasterlänge, Bereitschaftszeit und Synchronisationsprotokoll und dergleichen in einer Art gewählt sind, dass sie eine einfache Inbetriebnahme des mitgeführten Moduls zu erlauben.

9. Vorrichtung nach Anspruch 8, dadurch gekennzeichnet, dass die Struktur des Rasters, das durch den Satelliten ausgesandt wird, eine feststehende Anzahl von beispielsweise 48 DVB-Paketen enthält.

10. Vorrichtung nach Anspruch 9, dadurch gekennzeichnet, dass ein Verhältnis von 52/48, für die Erhöhung des Flusses auf den im AMRT-Modus rekonfiguriert aufsteigenden Verbin dungen im AMRT-Modus rekonfiguriert benutzt wird.

11. Vorrichtung nach einern der Ansprüche 1 bis 10, dadurch gekennzeichnet, dass die Hinzufügung des AMRT-Modus modular ist, so dass wenig Änderungen in der Ausrüstung der Sendestationen am Boden gegenüber dem kontinuierlichen Transmissions-Modus erforderlich sind.

12. Vorrichtung nach einem der Ansprüche 1 bis 11, dadurch gekennzeichnet, dass man mit der Hinzufügung des AMRT-Modus eine Verträglichkeit des multiplexten Signals auf der absteigenden Verbindung mit den Empfängern am Boden erhält, die bestimmt sind, Signale gemäss der Norm DVB-S zu empfangen.

13. Vorrichtung nach einem der Ansprüche 1 bis 12, dadurch gekennzeichnet, dass die Verwaltung des AMRT-Modus durch ein PID-Identifikationsfeld sichergestellt wird.

14. Vorrichtung nach einem der Ansprüche 1 bis 13, dadurch gekennzeichnet, dass das PID-Feld innerhalb des Telemetrie-Protokolls verwendet wird.

15. Vorrichtung nach einem der Ansprüche 1 bis 14, dadurch gekennzeichnet, dass das PID-Feld in der Verwaltung der Synchronisation verwendet wird

## Claims

1. Arrangement for transmitting digital information by satellite from a plurality of ground stations, comprising :
- at least one plurality of uplinks (1a, 1b, ... , 1n) provided to send packet formated digital information to the satellite, on at least two different frequencies;
- at least one module (10), embarked on board a satellite and adapted for receiving, multiplexing and re-formating the information on a single downlink;
characterized in that at least one of the uplinks (1a, 1b, ... 1n) works in a Time Division Multiple Access mode, so called TDMA, and at least one other uplink works in a continuous transmission mode.

2. Arrangement according to claim 1, characterized in that a pre-mentioned uplink is configurable in a TDMA mode or in a continuous transmission mode.

3. Device according to one of claims 1 or 2, characterized in that the signal as emitted by the satellite is a time multiplex containing all the useful information, individually emitted towards the satellite by a plurality of ground stations, and is rigorously compatible with receivers designed for receiving signals according to the satellite digital video broadcasting standard in the Ku bands, as called DVB-S.

4. Arrangement according to one of claims 1 to 3, characterized in that the TDMA or continuous configuration of an uplink is made without a working of the other links be affected, by making an increase of transmission rate on the up-path of a link with respect to the working rate in a continous transmission mode on this link, and this increase being used for accomodating the preamble and guard time fonctions of the TDMA mode transmission.

5. Arrangement according to one of claims 1 to 4, characterized in that the structure of the MPEG2 packets of the signal as emitted by the satellite is used on the following manner for defining the TDMA frames, these TDMA frames being generated on board the satellite :
- in lack of received data, the multiplexer generates jamming packets, the programm identification (PID) of which takes a single value which is proper for each uplink,
- when an uplink is configured in TDMA mode, the multiplexer will number, in a cyclic manner, the order of the generated jamming packets, a 5 bit field for numbering the jamming packets in the useful part of the MPEG2 packet being used for this purpose,
- when a burst of an uplink, among n stations, comes to the satellite in phase with a TDMA frame portion, the DVB packets of this burst are substituted to the jamming packets for this TDMA frame portion.

6. Arrangement according to one of claims 1 to 5, characterized in that activating or stopping of a TDMA station transmission is made in an autonomous manner without coordination with the other stations which share the same link.

7. Arrangement according to one of claims 1 to 6, characterized in that a short burst and determined packets are used for permitting the ground stations to make the fast, reliable and accurate acquisition according the protocole between the same and the receiving portion of the embarked module.

8. Arrangement according to one of claims 1 to 7, characterized in that the basic parameters, frame length, guard time and synchronization protocole and the like, are selected so as to enable a simple implementation of the embarked module.

9. Arrangement according to claim 8, characterized in that the frame structure as emitted by the satellite comprises a fixed number, for example equal to 48 DVB packets.

10. Arrangement according to claim 9, characterized in that a 50/48 ratio is used for the rate increase on the uplinks as reconfigured in TDMA mode.

11. Arrangement according to one of claims 1 to 10, characterized in that the addition of the TDMA mode is a modular one, so that only few changes are made in the equipment of the ground broadcasting stations with respect to the continuous transmission mode.

12. Arrangement according to one of claims 1 to 11, characterized in that a compatibility of the multiplexed signal on the downlink is made with the ground receivers designed for receiving signals according to the DVB-S standard with the addition of the TDMA mode.

13. Arrangement according to one of claims 1 to 12, characterized in that the TDMA mode management is ensured by a PID identification field.

14. Device according to one of claims 1 to 13, characterized in that the PID field is used in the telemetry protocole.

15. Arrangement according to one of claims 1 to 14, characterized in that the PID field is used in the synchronization management.
